# EUROPÄISCHE PATENTANMELDUNG

(11) **EP 2 253 251 A1**
(43) Veröffentlichungstag der Anmeldung: **24.11.2010**
(21) Anmeldenummer: 10005265.3
(22) Anmeldetag: 20.05.2010
(51) Int. Cl.: A47G 1/06

(54) **Bilderrahmen**

(30) Priorität: 22.05.2009 DE 202009007334 U
(71) Anmelder: Weiland, Klaus, 76571 Gaggenau (DE)
(72) Erfinder: Schulte, Wolfgang, 60596 Frankfurt am Main (DE)
(74) Vertreter: Jochem, Bernd

(57) **Zusammenfassung**

Der Bilderrahmen, insbesondere für Fotografien, hat eine das Bild rückseitig abstützende Anlagefläche, eine vor dem Bild angeordnete, transparente Scheibe und eine Beleuchtungseinrichtung. Um ein in dem Bilderrahmen aufgenommenes Bild mit einfachen Mitteln stärker aufzuwerten als ein herkömmlicher Bilderrahmen und es in seiner Umgebung zu einer Besonderheit zu machen, ist vorgesehen, dass sich die Anlagefläche (20) unter einem spitzen Winkel schräg zu der Scheibe (38) erstreckt. Neben derjenigen Seitenkante oder Ecke des Sichtfeldes der Scheibe (38), wo der Abstand zwischen der Anlagefläche (20) und der Scheibe (38) am größten ist, ist in dem Raum hinter der Scheibe (38) wenigstens eine vorderseitig überdeckte, das Bild beleuchtende Lichtquelle (24) angeordnet. Diese kann somit die gesamte Fläche des schräg gehaltenen Bildes beleuchten.

## Beschreibung

Die Erfindung betrifft einen Bilderrahmen, insbesondere für Fotografien, mit einer das Bild rückseitig abstützenden Anlagefläche, einer vor dem Bild angeordneten, transparenten Scheibe und einer Beleuchtungseinrichtung.

Es gibt Bilderrahmen bzw. Gehäuse zur Darstellung hinterleuchteter Diapositive. Sie sind kompliziert und teuer, so daß sie nur noch selten hergestellt werden. Die Erfindung geht davon aus, daß bereits ein normaler Bilderrahmen die Funktion hat, das darin aufgenommene Bild oder Foto abzugrenzen und hervorzuheben. Der Erfindung liegt deshalb die Aufgabe zugrunde, einen Bilderrahmen zur Verfügung zu stellen, der das darin aufgenommene Bild, insbesondere ein Foto, noch stärker aufwertet als ein herkömmlicher Bilderrahmen und in seiner Umgebung zu einer Besonderheit macht.

Vorstehende Aufgabe wird erfindungsgemäß dadurch gelöst, daß sich die Anlagefläche für das Bild unter einem spitzen Winkel schräg zu der Scheibe erstreckt und neben derjenigen Seitenkante oder Ecke des Sichtfeldes der Scheibe, wo der Abstand zwischen der Anlagefläche und der Scheibe am größten ist, in dem Raum hinter der Scheibe wenigstens eine vorderseitig überdeckte, das Bild beleuchtende Lichtquelle angeordnet ist.

Durch die Erfindung wird erreicht, daß die Strahlen der Lichtquelle(n) im wesentlichen die gesamte Fläche des Bildes erreichen. Gefördert wird dieser Effekt noch dadurch, daß sich die Lichtquelle unmittelbar hinter der transparenten Scheibe befindet, so daß ein wesentlicher Teil der direkten Strahlung unter einem Winkel, der kleiner ist als der Grenzwinkel der Totalreflexion, auf die Scheibe trifft und zum Bild hin reflektiert wird. Natürlich macht sich auf der beleuchteten Bildfläche der jeweilige Abstand zur Lichtquelle bemerkbar. Diese naturgesetzliche Gegebenheit läßt sich für zusätzliche Effekte nutzen, z. B. dadurch, daß das Bild mit einer solchen Ausrichtung in dem Bilderrahmen plaziert wird, daß sich die Lichtquelle auf derjenigen Seite z. B. neben einem Foto befindet, von welcher auch bei der Aufnahme der Lichteinfall stattfand. Insbesondere bei Aufnahmen von Künstlern auf einer Bühne mit besonders starker Beleuchtung von unten, oben oder einer bestimmten Seite, ergibt der neue Bilderrahmen eine realistischere Darstellung der Aufnahmesituation als das einfache Foto. Dies gilt vor allem dann, wenn in einer bevorzugten Ausgestaltung der Erfindung mehrere punktförmige Leuchtdioden unterschiedlicher Farben in dem Bilderrahmen installiert sind, die einzeln oder in wechselnder Zusammenstellung nacheinander zum Leuchten gebracht werden.

Um einerseits die Neigung des Bildes mit Bezug auf die transparente Scheibe möglichst unauffällig zu halten, andererseits das Bild auch in den Randbereichen möglichst gut zu beleuchten, ist vorgesehen, daß an wenigstens einer Seitenkante, an welcher sich der Abstand zwischen der Anlagefläche und der Scheibe zu der Lichtquelle hin vergrößert, ein über seine Länge keilförmiger Spiegelsteg angeordnet ist, der das Licht der Lichtquelle zum Bild hin reflektiert und an dem sich für einen Betrachter der anliegende Randbereich des Bildes spiegelt. Das Spiegeln des Randbereichs des Fotos erzeugt dabei einen besonderen zusätzlichen Effekt. Außerdem kann der keilförmige Spiegelsteg dazu benutzt werden, mit seiner schrägen Fläche oder Kante das Bild gegen die Anlagefläche zu drücken und flach zu halten.

Um bei einem Rahmen für rechteckige Bilder, bei dem eine oder mehrere Lichtquellen an einer Seite angebracht sind, auch auf der gegenüberliegenden Seite Licht auf die Bildfläche zu reflektieren und den genannten Spiegeleffekt zu erzeugen, ist bei der bevorzugten praktischen Ausführung der Erfindung auch dort ein bestimmter Zwischenabstand zwischen der Anlagefläche und der Scheibe vorgesehen und ein gleichmäßig breiter Spiegelsteg angeordnet. Die Beleuchtung des Fotos kann außerdem dadurch gefördert werden, daß die Lichtquellen einzeln in schalenförmigen Reflektoren oder in Reihe in einem rinnenförmigen Reflektor installiert sind, wenn es sich nicht ohnehin um Lichtquellen handelt, die ihr Licht nur in einer Richtung abstrahlen. In aller Regel wird man die Anordnung der Lichtquellen so wählen, daß sie im Bilderrahmen gegenüber dem Betrachter verdeckt positioniert sind, also bei Betrachtung des Bildes unter einem üblichen Betrachtungswinkel die Strahlen der Lichtquellen nicht unmittelbar das Auge des Betrachters treffen. Außerdem kann die Beleuchtung des Fotos durch eine Streuscheibe, z. B. eine Milchglasscheibe, vor den Lichtquellen vergleichmäßigt werden.

In einer Ausführung als normaler Fotorahmen ist der vorgeschlagene Bilderrahmen vorzugsweise ein Wechselrahmen, der sich zum Auswechseln von Fotos einfach und schnell aufklappen und wieder schließen läßt. Alternativ könnte er auch aus zwei vollständig voneinander trennbaren Gehäuseteilen bestehen. In beiden Fällen enthält er vorzugsweise einen elektrischen Akkumulator, der mit der Lichtquelle über eine Leitung verbunden ist, die einen von Hand betätigbaren Schalter einschließt.

Ein weiteres Anwendungsbeispiel für die Erfindung sind aus transparentem Kunststoff bestehende CD-Boxen, die in der Regel unter ihrer Deckelscheibe eine von außen sichtbare Fotografie eines Künstlers oder ein sonstiges Bild tragen. Hier dient demnach die CD-Box als Bilderrahmen und ist gut geeignet, erfindungsgemäß mit einer schrägen Anlagefläche und wenigstens einer Lichtquelle versehen zu werden.

Schließlich sei erwähnt, daß das Prinzip des neuen Bilderrahmens auch zur optimalen Darstellung z. B. der Bildnisse von Heiligen benutzt werden kann. In diesem Fall kann der Bilderrahmen die Gestalt eines Triptychons haben, bei dem im mittleren Teil ein beleuchtetes Bild aufgenommen ist, das durch Verschwenkbewegungen der beiden an den Seitenkanten angelenkten Seitenflügel überdeckt bzw. freigelegt werden kann. Die Verschwenkbewegung eines oder der beiden Seitenflügel des Triptychons kann zur Betätigung eines Schalters derart ausgenutzt werden, daß sich beim Aufklappen die wenigstens eine Lichtquelle einschaltet und beim Zuklappen die Lichtquelle ausgeschaltet wird.

Ein Ausführungsbeispiel der Erfindung wird nachstehend anhand der Zeichnung näher erläutert. Es zeigen:
- Fig. 1: eine perspektivische Darstellung einer im wesentlichen dreiteiligen CD-Box in einer Stellung mit aufgeklapptem Vor- derteil,
- Fig. 2: eine perspektivische Ansicht der CD-Box nach Fig. 1, nachdem das Vorderteil und das mit diesem lösbar verbundene Mit- telteil relativ zum hinteren Teil auf- geschwenkt worden sind,
- Fig. 3: eine perspektivische Ansicht der Innen- seite des hinteren Rahmenteils eines leicht zu öffnenden Wechselrahmens und
- Fig. 4: eine perspektivische Ansicht der Außen- seite des in Fig. 3 gezeigten Rahmen- teils.

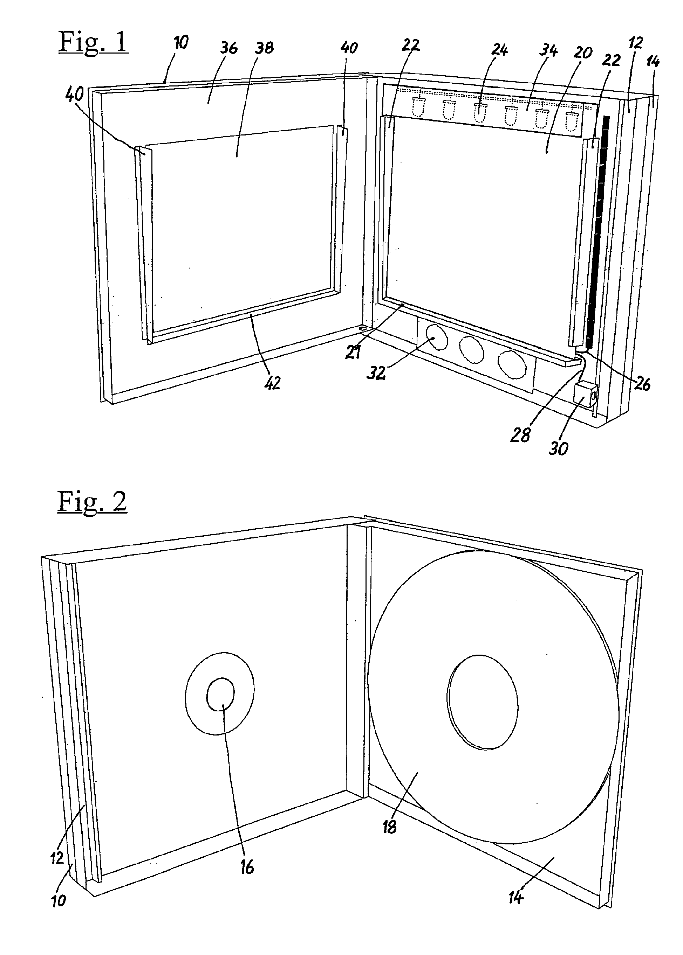

Die in der Zeichnung in Fig. 1 und 2 dargestellte CD-Box besteht aus drei an einer Seitenkante schwenkbar miteinander verbundenen Gehäuseteilen, nämlich einem Vorderteil 10, einem Mittelteil 12 und einem hinteren Teil 14. Wie in Fig. 2 gezeigt, befindet sich auf der Rückseite des Mittelteils 12 ein Haltezapfen 16 für eine CD 18, die im geschlossenen Zustand der Box zwischen dem Mittelteil 12 und dem hinteren Teil 14 eingeschlossen ist. Im geschlossenen Zustand sind die drei Gehäuseteile in üblicher Weise miteinander leicht verrastet. Auch im übrigen entspricht die Aufnahme der CD 18 zwischen dem Mitteilteil 12 und dem hinteren Teil 14 der Aufnahme in herkömmlichen CD-Boxen.

Die Vorderseite des Mittelteils 12 bildet zusammen mit dem Vorderteil 10 der CD-Box einen Wechselrahmen für ein rechteckiges Foto. Zu diesem Zweck ist das Mittelteil 12 mit einer rechteckigen Anlagefläche 20 ausgebildet, an welcher die Rückseite eines Fotos entsprechender Größe flach anzulegen ist. Damit das Foto genau ausgerichtet auf der Anlagefläche 20 liegt und auch nicht verrutscht, erstreckt sich längs ihrer Unterkante eine Halteleiste 21. Außerdem sind an der rechten und linken Seite der Anlagefläche 20 Führungsleisten 22 angebracht oder angeformt. Das auf die Halteleiste 21 aufgesetzte Foto paßt genau zwischen die beiden Führungsleisten 22. Die Besonderheit der Anlagefläche 20 besteht darin, daß sie in der aufrechten Lage nach Fig. 1 von unten nach oben gleichmäßig zurückweicht, also eine schräge Ebene bildet. Im oberen Randbereich sind auf der Vorderseite des Mitteilteils 12, vor der schrägen Ebene der Anlagefläche 20 in einer Reihe 6 Leuchtdioden 24 installiert, die in der gezeigten Stellung der CD-Box senkrecht nach unten strahlen und somit ein an der Anlagefläche 20 anliegendes Foto durch ihre Strahlen von oben bis unten erhellen. Die Leuchtdioden 24 sind über Leitungen 26, 28, die einen von Hand zu betätigenden Druckschalter 30 einschließen, mit einem oder mehreren elektrischen Akkumulatoren 32 verbunden. Die Vorderseite der Leuchtdioden 24 ist durch einen im Beispielsfall leistenförmigen Reflektor 34 überdeckt, der nach vorne gerichtete Lichtstrahlen der Leuchtdioden 24 zu dem an der schrägen Anlagefläche 20 anliegenden Foto hin reflektiert.

Das Vorderteil 10 der CD-Box besteht aus transparentem Kunststoff. Indem man die Außen- oder Rückseite des Vorderteils 10 mit einem rahmenförmigen Farbauftrag 36 versieht, bleibt im mittleren Bereich eine transparente Scheibe 38 frei, durch die hindurch bei eingelegtem Foto und vollständig geschlossener CD-Box das Foto betrachtet werden kann. An der rechten und linken Seitenkante der transparenten Scheibe 38 ist jeweils ein keilförmiger Steg 40 und an ihrer Unterkante ein gleichmäßig breiter Steg 42 angeformt oder angebracht, deren Innenseite bzw. Oberseite jeweils spiegelnd ausgebildet ist. Der Keilwinkel der Spiegelstege 40 entspricht der Schräglage der Anlagefläche 20, und die sich von unten nach oben vergrößernde Höhe der Spiegelstege 40 ist so bemessen, daß diese ebenso wie der gerade Spiegelsteg 42 bei geschlossener CD-Box über ihre gesamte Länge an dem Foto anliegen, um es leicht gegen die Anlagefläche 20 anzudrücken. Die Spiegelstege 40 befinden sich dabei zwischen den Führungsleisten 22, jeweils unmittelbar neben diesen, und der Spiegelsteg 42 befindet sich unmittelbar oberhalb der Halteleiste 12.

In der gezeigten Stellung ruht bei geöffneter CD-Box das Foto mit seiner Unterkante auf der Halteleiste 21. Ebenso wie die keilförmigen Spiegelstege 40 reflektiert auch der gerade Spiegelsteg 42 die auffallenden Lichtstrahlen der Leuchtdioden 24 und wirft sie auf das Foto zurück. Außerdem spiegelt sich in den Spiegelstegen 40, 42 der jeweils anliegende Randbereich des Fotos, wenn ein Betrachter schräg durch die transparente Scheibe 38 sieht.

Ein normaler Wechselrahmen für Fotos oder andere Bilder könnte ebenso oder ähnlich aufgebaut sein wie das Vorderteil 10 in Verbindung mit dem Mittelteil 12 der gezeigten CD-Box. Dabei könnte anstelle der gezeigten, eingebauten Batterien oder Akkumulatoren 32 eine elektrische Anschlußbuchse vorgesehen sein, die über elektrische Leitungen mit den Leuchtdioden 24 verbunden ist, und in die ein mit einem Transformator verbundener Anschlußstecker eingesteckt werden kann.

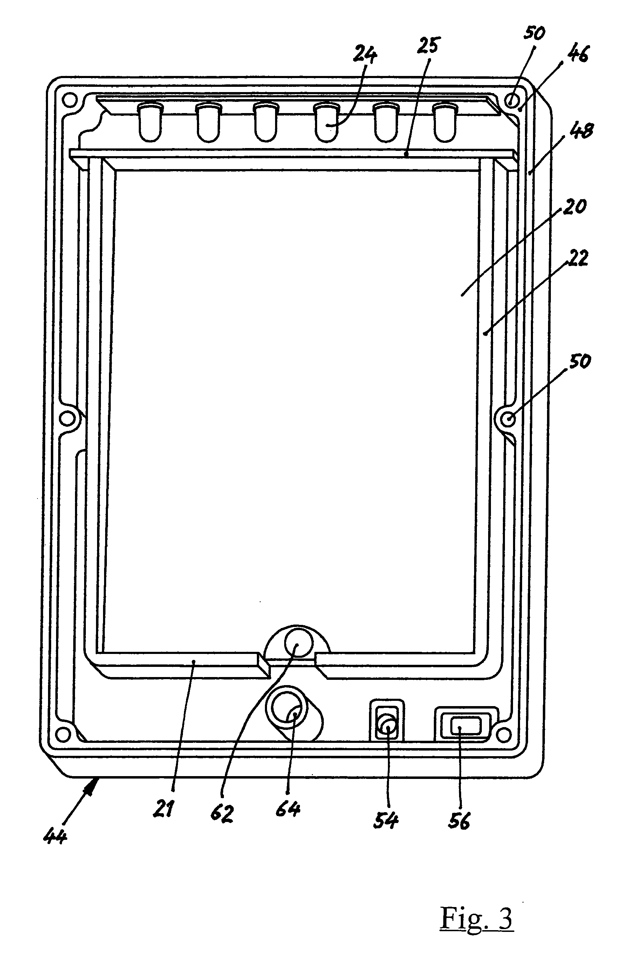

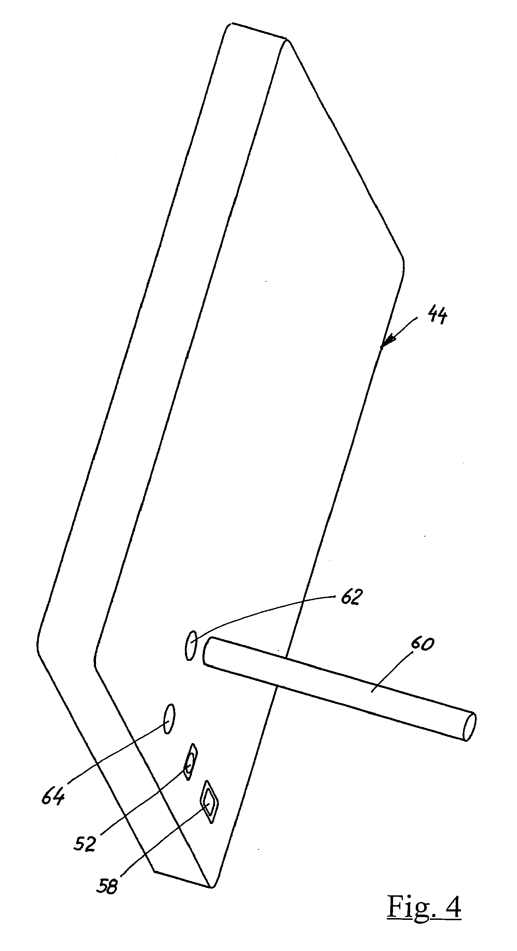

In Fig. 3 und 4 sind die Innen- bzw. Außenseite des hier mit 44 bezeichneten hinteren Rahmenteils eines derartigen Wechselrahmens mit einer elektrischen Anschlussbüchse gezeigt. Auch an den hinteren Rahmenteil 44 sind seitliche Führungsleisten 22 und eine untere Halteleiste 21 angeformt. Außerdem ist der hintere Rahmenteil 44 zwischen den Führungsleisten 22 mit einer rechteckigen Anlagefläche 20 ausgebildet, an welcher die Rückseite eines Fotos entsprechender Größe flach anzulegen ist. Das auf die Halteleiste 21 aufgesetzt Foto passt genau zwischen die beiden Führungsleisten 22. Auch bei dieser Ausführungsvariante weicht die Anlagefläche 20 in der aufrechten Lage nach Fig. 3 von unten nach oben gleichmäßig zurück, bildet also eine schräge Ebene. Im oberen Randbereich sind vor der schrägen Ebene der Anlagefläche 20 in einer Reihe 6 Leuchtdioden 24 installiert, die senkrecht nach unten strahlen und das an der Anlagefläche 20 anliegende Foto von oben bis unten erhellen. Eine zwischen den Leuchtdioden 23 und der Anlagefläche 20 angebrachte Streuscheibe 25 vergleichmäßigt die Beleuchtung des Fotos.

Der im äußeren Umriss rechteckige hintere Rahmenteil 44 wird bestimmungsgemäß abgeschlossen durch ein entsprechendes, ähnlich wie das Vorderteil 10 mit einer transparenten Scheibe 38 und keilförmigen Spiegelstegen 40 sowie einem geraden Spiegelsteg 42 versehenes, nicht gezeigtes Vorderteil mit einem flachen Randbereich. Es ist im Umriss um soviel kleiner als der hintere Rahmenteil 44, dass es genau zwischen dessen Umfangswände passt. Im montierten Zustand liegt das Vorderteil an einer Anlagefläche 46 im hinteren Rahmenteil 44 an, die gegenüber der Vorderkante 48 der Umfangswände soweit eingesenkt ist, dass die Außenfläche des Vorderteils bündig mit der Vorderkante 48 des hinteren Rahmteils 44 liegt.

In den inneren Eckbereichen sowie an der Innenseite der längeren Seitenwände des Unterteils sind Magnete 50 eingelassen, deren Oberfläche bündig mit der Anlagefläche 46 liegt. Das nicht gezeigte Vorderteil besteht aus einem magnetisierbaren Material, z. B. Stahlblech, oder enthält ebenfalls in denjenigen Bereichen, die an den Magneten 50 zur Anlage kommen, Magnete oder magnetisches Material. Auf diese Weise erhält man einen sauberen, exakten, beliebig oft zu öffnenden Abschluss des Gehäuses, das einen Wechselrahmen für Fotos bildet.

Selbstverständlich könnte der hintere Rahmenteil 44 so groß bemessen sein, dass er neben der Anlagefläche 20 noch genügend Raum zur Aufnahme von Akkumulatoren bietet. Im Beispielsfall nach Fig. 3 und 4 ist aber vorgesehen, dass der elektrischen Strom zum Betrieb der Leuchtdioden 24 von einem äußeren Transformator oder Akkumulator über ein elektrisches Anschlusskabel und eine in Fig. 4 mit 52 bezeichnete Anschlussbuchse zugeführt wird. Diese ist in einer in Fig. 3 gezeigten Ausnehmung 54 im hinteren Rahmenteil 44 installiert. Von dort führen nicht gezeigte elektrische Leitungen zu den Leuchtdioden 24. Zwischengeschaltet ist ein in einer passenden Aufnahme 56 installierter elektrischer Schalter 58, der in Fig. 4 angedeutet und von außen betätigbar ist.

Um den Wechselrahmen in geeigneter Schräglage aufstellen zu können, ist ein Stab 60 vorgesehen, der in ein Sackloch 62 in der Außenwand des Unterteils 44 eingesteckt werden kann. Ein weiteres Loch 64 in der Außenwand ist ein Durchgangsloch, durch das der Stab 16 hindurchgestoßen werden kann, um von innen gegen das durch die Magnete 50 gehaltene Vorderteil des Gehäuses zu drücken, um dieses abzuheben und dadurch das Gehäuse zu öffnen, wenn z. B. das Foto ausgewechselt werden soll.

Abweichend von dem vorstehend beschriebenen Ausführungsbeispiel könnten die Spiegelleisten 40, 42 am Vorderteil des Wechselrahmens entfallen und stattdessen die Halteleiste 21 und die Führungsleisten 22 innenseitig verspiegelt sein. Die Führungsleisten 22 wird man in diesem Fall derart keilförmig ausführen, dass sie im wesentlichen bis an die Innenseite des Vorderteils oder der darin enthaltenen Scheibe 38 heranreichen.

Eine weitere Abwandlung sieht vor, dass die Leuchtdioden 24 nicht längs der gesamten Oberkante, sondern um eine der oberen Ecken herum angeordnet werden. Das ergibt dann einen Beleuchtungseindruck wie bei einer schräg von rechts oder links oben strahlenden Sonne.

Wie bereits erwähnt, kann der Bilderrahmen auch die Form eines Triptychons haben, dessen eines Flügelteil beim Aufschwenken die Leuchtdioden 24 einschaltet und beim Schließen wieder ausschaltet.

## Patentansprüche

1. Bilderrahmen, insbesondere für Fotografien, mit einer das Bild rückseitig abstützenden Anlagefläche (20), einer vor dem Bild angeordneten, transparenten Scheibe (38) und einer Beleuchtungseinrichtung (24), **dadurch gekennzeichnet, daß** sich die Anlagefläche (20) unter einem spitzen Winkel schräg zu der Scheibe (38) erstreckt und neben derjenigen Seitenkante oder Ecke des Sichtfeldes der Scheibe (38), wo der Abstand zwischen der Anlagefläche (20) und der Scheibe (38) am größten ist, in dem Raum hinter der Scheibe (38) wenigstens eine vorderseitig überdeckte, das Bild beleuchtende Lichtquelle (24) angeordnet ist.

2. Bilderrahmen nach Anspruch 1, **dadurch gekennzeichnet, daß** an wenigstens einer Seitenkante, an welcher sich der Abstand zwischen der Anlagefläche (20) und der Scheibe (38) zu der Lichtquelle (24) hin vergrößert, ein über seine Länge keilförmiger Spiegelsteg (40) angeordnet ist, der das Licht der Lichtquelle (24) zum Bild hin reflektiert und an dem sich für einen Betrachter der anliegende Randbereich des Bildes spiegelt.

3. Bilderrahmen nach Anspruch 2, **dadurch gekennzeichnet, daß** der keilförmige Spiegelsteg (40) mit seiner schrägen Fläche oder Kante das Bild in flacher Anlage an der Anlagefläche (20) hält.

4. Bilderrahmen nach einem der Ansprüche 1 bis 3, **dadurch gekennzeichnet, daß** bei einem Rahmen für rechteckige Bilder, bei dem die wenigstens eine Lichtquelle (24) an einer Seitenkante angebracht ist, an der gegenüberliegenden Seitenkante ein bestimmter Zwischenabstand zwischen der Anlagefläche (20) und der Scheibe (38) besteht und ein gleichmäßig breiter Spiegelsteg (42) angeordnet ist, der das Licht der Lichtquelle (24) zum Bild hin reflektiert und an dem sich für einen Betrachter der anliegende Randbereich des Bildes spiegelt.

5. Bilderrahmen nach Anspruch 4, **dadurch gekennzeichnet, daß** die vorderseitige Überdeckung der wenigstens einen Lichtquelle (24) durch einen Reflektor (34) gebildet ist, der auftreffendes Licht der Lichtquelle (24) zum Bild hin reflektiert.

6. Bilderrahmen nach einem der Ansprüche 3 bis 5, **dadurch gekennzeichnet, daß** an den beiden Seitenkanten zwischen den Seitenkanten mit dem größten und kleinsten Abstand der Scheibe (38) von der Anlagefläche (20) jeweils eine Führungsleiste (22) für die anliegende Randkante des Bildes und innenseitig daneben ein keilförmiger Spiegelsteg (40) angeordnet sind.

7. Bilderrahmen nach einem der Ansprüche 2 bis 6, **dadurch gekennzeichnet, daß** er als Wechselrahmen ausgebildet ist, bei dem ein Rahmenvorderteil (10) mit transparenter Scheibe (38) und keilförmigen Spiegelstegen (40) sowie einem geraden Spiegelsteg (42) zwischen deren verjüngten Enden vollständig oder aufschwenkbar lösbar ist von einem hinteren Rahmenteil (12, 44) mit der Anlagefläche (20), wenigstens einer Lichtquelle (24), den Führungsleisten (22) und einer sich zwischen diesen an ihrem am weitesten von der Lichtquelle (24) entfernten Ende erstreckenden Halteleiste (21).

8. Bilderrahmen nach Anspruch 7, **dadurch gekennzeichnet, dass** der Rahmenvorderteil (10) magnetisch auf dem hinteren Rahmenteil (44) gehalten ist.

9. Bilderrahmen nach Anspruch 8, **dadurch gekennzeichnet, dass** er durch einen in ein Loch (62) im hinteren Rahmenteil (44) einsteckbaren Stab (60) in aufgestellter Lage abstützbar ist und mittels des Stabs (60) der Rahmenvorderteil (10) vom hinteren Rahmenteil (44) ablösbar ist.

10. Bilderrahmen nach einem der vorhergehenden Ansprüche, **dadurch gekennzeichnet, daß** die wenigstens eine Lichtquelle (24) mit einem im Bilderrahmen aufgenommenen, elektrischen Akkumulator (32) über eine Leitung (26, 28) verbunden ist, die einen von Hand betätigbaren Schalter (30) einschließt.

11. Bilderrahmen nach einem der Ansprüche 1 bis 10, **dadurch gekennzeichnet, daß** er Teil einer CD-Box (10, 12, 14) ist.

12. Bilderrahmen nach einem der Ansprüche 1 bis 10, **dadurch gekennzeichnet, daß** er als Triptychon ausgebildet ist.

13. Bilderrahmen nach Anspruch 12, **dadurch gekennzeichnet, daß** die wenigstens eine Lichtquelle (24) mit einer Stromquelle über eine Leitung verbunden ist, die einen durch das Aufschwenken eines der Seitenflügel betätigbaren Schalter einschließt.

14. Bilderrahmen nach einem der vorhergehenden Ansprüche, **dadurch gekennzeichnet, daß** er eine Steuervorrichtung für mehrere Lichtquellen (24) enthält, durch die einzelne oder Gruppen von Lichtquellen mit unterschiedlichen Farben nacheinander ein- und ausschaltbar sind.

15. Bilderrahmen nach einem der vorhergehenden Ansprüche, **dadurch gekennzeichnet, dass** die Lichtquellen (24) um eine Ecke der Anlagefläche (20) für das Bild herum angeordnet sind und dieses diagonal beleuchten.
